# EUROPEAN PATENT APPLICATION

(11) **EP 4 496 179 A1**
(43) Date of publication of application: **22.01.2025**
(21) Application number: 23799590.7
(22) Date of filing: 12.04.2023
(51) Int. Cl.: H02J 7/34, H02J 7/00, G06F 1/26, G06F 1/16, H01M 10/48

(54) **METHOD AND ELECTRONIC DEVICE FOR IMPROVING USE OF MULTIPLE BATTERIES**

(30) Priority: 04.05.2022 KR 20220055577
(71) Applicant: Samsung Electronics Co., Ltd, Suwon-si, Gyeonggi-do 16677 (KR)
(72) Inventor: WOO, Kwangtaek, Suwon-si, Gyeonggi-do 16677 (KR); CHOI, Jaeho, Suwon-si, Gyeonggi-do 16677 (KR); KIM, Seonghun, Suwon-si, Gyeonggi-do 16677 (KR); LEE, Changho, Suwon-si, Gyeonggi-do 16677 (KR); AN, Jinwan, Suwon-si, Gyeonggi-do 16677 (KR)
(74) Representative: Walaski, Jan Filip
(86) International application number: PCT/KR2023/004944
(87) International publication number: WO 2023/214707

(57) **Abstract**

Various embodiments of the present invention provide a method and an apparatus configured to: monitor the state of a first battery, the state of a second battery, and the state of an electronic device; determine whether the state of the first battery or the second battery corresponds to a configured condition; when the state of the first battery or the second battery corresponds to the configured conditions, determine to preferentially use one of the first battery and the second battery on the basis of a battery arrangement structure; and control the battery determined to be preferentially used, on the basis of the state of the electronic device. Various embodiments are possible.

## Description

### [Technical Field]

Various embodiments of the disclosure relate to a method and an electronic device for improving the use of multiple batteries.

### [Background Art]

With the development of digital technology, various types of electronic devices such as mobile communication terminals, personal digital assistants (PDAs), electronic notebooks, smart phones, tablet PCs (personal computers), or wearable devices are widely used. Electronic devices may have limited sizes for portability, which also limits the size of the display. Recently, various types of electronic devices that provide expanded screens through a multi-display have been developed.

For example, an expanded screen is provided by a multi-display including multiple displays. Electronic devices may have new form factors such as multi-display (e.g., dual display) devices (e.g., foldable devices, rollable devices, or slidable devices). A foldable device is equipped with a foldable (or bendable) display (e.g., a foldable display or a flexible display) and may be used by folding or unfolding the same. A rollable device or slidable device is equipped with a flexible display, and the flexible display may be rolled up and stored on the back of the slidable device, or the flexible display may be expanded to the front of the slidable device for use.

### [Disclosure of Invention]

### [Technical Problem]

An electronic device having a multi-display may include multiple batteries depending on the increased size. Conventional electronic devices display or operate battery use information in the same way as when they include one battery, even when they include multiple batteries.

In various embodiments, there may be provided a method and a device for efficiently using multiple batteries by determining a battery to be preferentially used, based on the arrangement structure of multiple batteries or the use state (e.g., signal intensity, grip state, or battery temperature) of the electronic device.

### [Solution to Problem]

An electronic device according to various embodiments of the disclosure may include a first housing, a second housing configured to be movable relative to the first housing, a first battery disposed in the first housing, a second battery disposed in the second housing, a memory, and a processor operatively connected to at least one of the first battery, the second battery, or the memory, wherein the processor may be configured to monitor a state of the first battery, a state of the second battery, and a state of the electronic device, determine whether or not the state of the first battery or the second battery meets configured conditions, determine, if the state of the first battery or the second battery meets the configured conditions, to preferentially use one of the first battery or the second battery, based on a battery arrangement structure, and control the battery determined to be preferentially used, based on the state of the electronic device.

An operating method of an electronic device, according to various embodiments of the disclosure, including a first battery disposed in a first housing and a second battery disposed in a second housing may include monitoring a state of the first battery, a state of the second battery, and a state of the electronic device, determining whether or not the state of the first battery or the second battery meets configured conditions, if the state of the first battery or the second battery meets the configured conditions, determining to preferentially use one of the first battery or the second battery, based on a battery arrangement structure, and controlling the battery determined to be preferentially used, based on the state of the electronic device.

### [Advantageous Effects of Invention]

According to various embodiments, battery usability may be improved by determining the usage priority indicating the battery to be preferentially used, among multiple batteries.

According to various embodiments, a battery to be preferentially used may be determined based on the arrangement structure of the multiple batteries, thereby efficiently using the multiple batteries.

According to various embodiments, when the signal intensity of the electronic device is low, the load is applied to the antenna so that the performance of the battery close to the antenna is reduced, so the battery located away from the antenna may be preferentially used, thereby improving the battery usage efficiency.

According to various embodiments, in an electronic device including two housings, such as a foldable electronic device, the battery included in the housing with a smaller contact area when the user holds the electronic device may be preferentially used, thereby improving the battery usage efficiency.

According to various embodiments, if the battery temperature is low, the battery usage efficiency is reduced, so the battery with a lower temperature may be preferentially used, among the multiple batteries, thereby improving the battery performance.

### [Brief Description of Drawings]

FIG. 1 is a block diagram of an electronic device in a network environment according to various embodiments.
FIG. 2A is a diagram illustrating front and back faces of a foldable electronic device when the electronic device is in an open state according to various embodiments.
FIG. 2B is a diagram illustrating front and back faces of a foldable electronic device when the electronic device is in a closed state according to various embodiments.
FIG. 3A is a diagram illustrating front and back faces of a rollable electronic device when the electronic device is in a closed state according to various embodiments.
FIG. 3B is a diagram illustrating front and back faces of a flexible electronic device when the electronic device is in an open state according to various embodiments.
FIG. 4 is a diagram illustrating the configuration of an electronic device according to various embodiments.
FIG. 5 is a flowchart illustrating an operating method of an electronic device according to various embodiments.
FIG. 6 is a diagram illustrating an example of an arrangement structure of components included in an electronic device according to various embodiments.
FIG. 7 is a flowchart illustrating a method for changing a battery to be preferentially used depending on a signal intensity in an electronic device according to various embodiments.
FIG. 8 is a flowchart illustrating a method for changing a battery to be preferentially used depending on a grip state in an electronic device according to various embodiments.
FIG. 9 is a flowchart illustrating a method for improving the use of multiple batteries in an electronic device according to various embodiments.
FIG. 10 is another flowchart illustrating a method for improving the use of multiple batteries in an electronic device according to various embodiments.

### [Mode for the Invention]

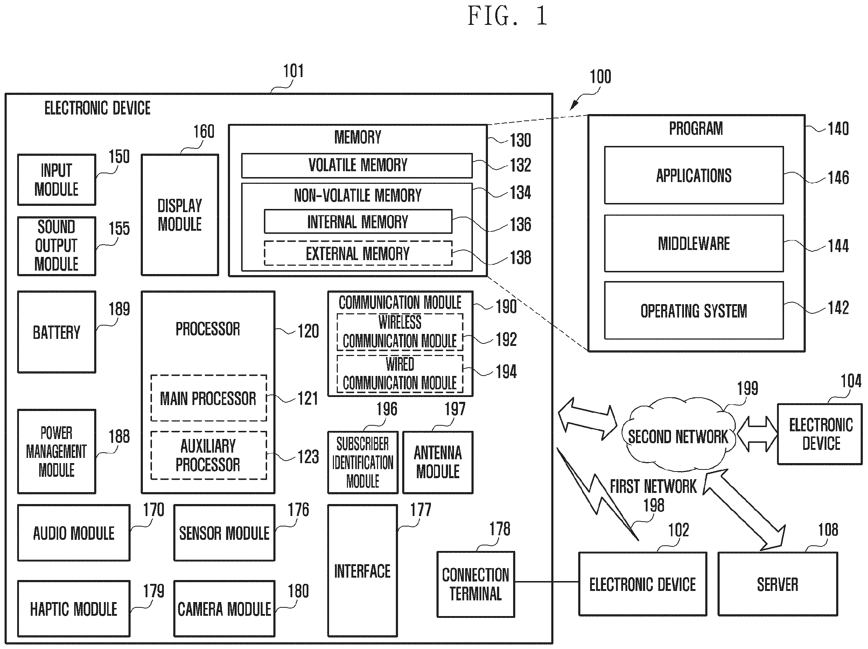

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

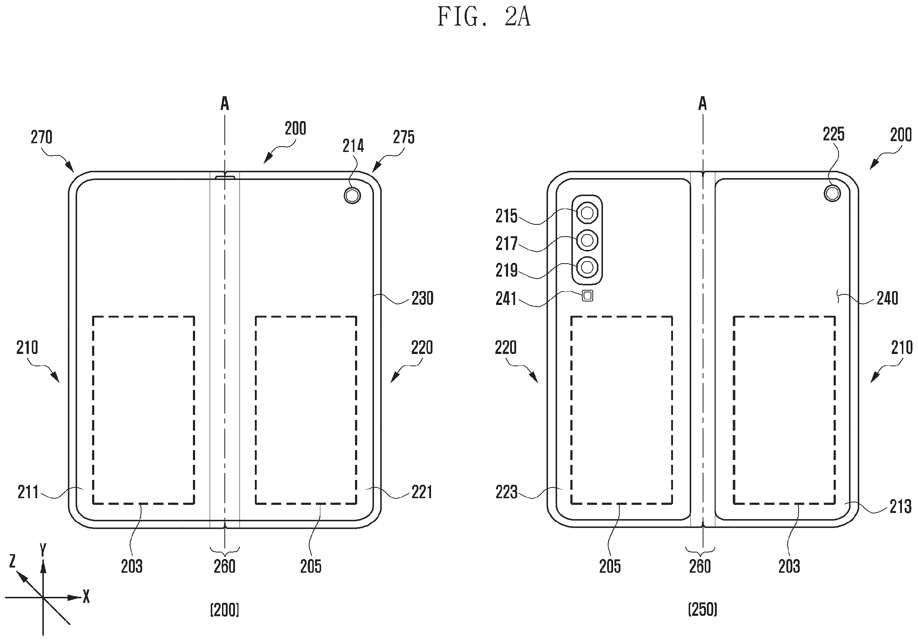

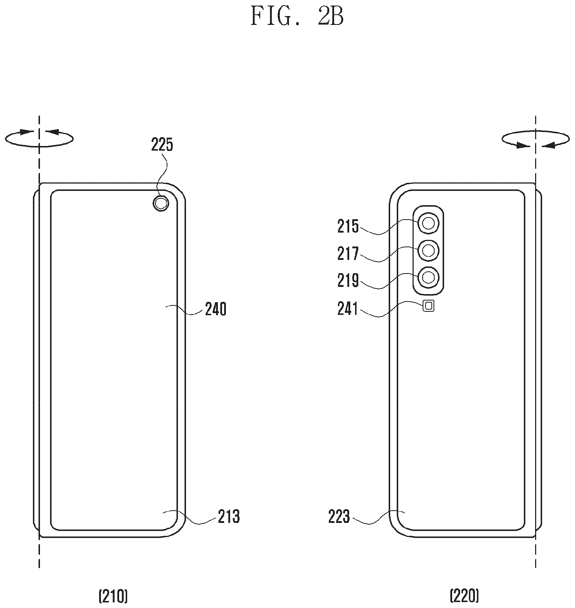

FIG. 2A is a diagram illustrating a front face 250 and a back face 255 of a foldable electronic device 200 when the electronic device is in an open state according to various embodiments. FIG. 2B is a diagram illustrating front and back faces of a foldable electronic device when the electronic device is in a closed state according to various embodiments.

Referring to FIG. 2A, the flexible electronic device 200 (e.g., the electronic device 101 in FIG. 1) according to various embodiments may include a first housing 210 including a first surface 211 and a third surface 213, and a second housing 220 including a second surface 221 and a fourth surface 223. The first surface 211 of the first housing 210 and the second surface 221 of the second housing 220 may indicate the front face 250 of the electronic device 200, and the third surface 213 of the first housing 210 and the fourth surface 223 of the second housing 220 may indicate the back face 255 of the electronic device 200.

The electronic device 200 in FIGS. 2A and 2B may be at least partially similar to the electronic device 101 in FIG. 1, may include the electronic device 101 in FIG. 1, or may further include other embodiments of the electronic device 101 in FIG. 1.

The first housing 210 and the second housing 220 may be disposed on both sides of a folding axis (e.g., the axis A), and may have an overall symmetrical shape with respect to the folding axis. For example, in the front face 250 of the electronic device 200, based on the folding axis, the first housing 210 may be on the left side of the electronic device 200 and the second housing 220 may be on the right side of the electronic device 200. The first housing 210 and the second housing 220 may be designed to be folded relative to each other. A hinge structure 260 may be provided between the first housing 210 and the second housing 220, so that the front face 250 of the electronic device 200 may be folded. A third sensor module that detects an angular change between the first housing 210 and the second housing 220 may be disposed in the hinge structure 260. The third sensor module may include at least one of an acceleration sensor, a gyroscope sensor, a geomagnetic sensor, a proximity sensor, a gesture sensor, or a Hall sensor. The first housing 210 may include a first battery 203, and the second housing 220 may include a second battery 205. The first battery 203 and the second battery 205 may have the same size or performance, or may have different sizes or performances.

The angle or distance between the first housing 210 and the second housing 220 may vary depending on whether the state of the electronic device 200 is an unfolded (or open) state, a folded (or closed) state, or an intermediate state. For example, the unfolded state may indicate an open state or a flat state. The unfolded state may indicate a state in which the first housing 210 and the second housing 220 are arranged side by side, and a state in which the electronic device 200 is completely unfolded. In the unfolded state, the angle between the first housing 210 and the second housing 220 is 180 degrees, and the first surface 211 of the first housing 210 and the second surface 221 of the second housing 220 may be arranged to face in the same direction (e.g., a first direction). FIG. 2A is a drawing showing the front face 250 of the electronic device 200 and the back face 255 of the electronic device 200 when the electronic device 200 is in the unfolded state.

The folded state may indicate a closed state (e.g., FIG. 2B). The folded state may indicate a state in which the first housing 210 and the second housing 220 are arranged to face each other, and a state in which the electronic device 200 is completely folded. In the folded state, the angle between the first housing 210 and the second housing 220 is a narrow angle (e.g., 0 to 5 degrees), so that the first surface 211 of the first housing 210 and the second surface 221 of the second housing 220 may face each other. Hereinafter, although an electronic device 200 implemented in an in-folding manner will be described, an electronic device 200 implemented in an out-folding manner may be implemented in the same or a similar manner.

The intermediate state may be a state in which the first housing 210 and the second housing 220 are arranged at a certain angle, and a state in which the electronic device 200 is not in the unfolded state or the folded state. The intermediate state may indicate a state in which the first surface 211 of the first housing 210 and the second surface 221 of the second housing 220 form a certain angle (e.g., 6 degrees to 179 degrees).

The electronic device 200 may form a first display 230 (e.g., a main display) (e.g., the display module 160 in FIG. 1) on the first surface 211 and second surface 221, which are on the front face 250 of the electronic device. The first display 230 may be formed entirely on the front face 250 (e.g., in the first direction of the electronic device 200). The first display 230 may indicate a flexible display in which at least a partial area is able to be transformed into a flat surface or a curved surface. The first display 230 may be folded left and right about the folding axis (e.g., the axis A). The first display 230 may include a first display area corresponding to the first surface 211 or a second display area corresponding to the second surface 221. In addition, the electronic device 200 may have a first camera 214 disposed on the second surface 221. Although a single first camera 214 is illustrated in the drawing, a plurality of first cameras 214 may be provided. Although the first camera 214 is disposed on the second surface 221 in the drawing, the first camera 214 may be disposed on the first surface 211.

In addition, the electronic device 200 may form a second display 240 (e.g., a sub-display or a cover display) (e.g., the display module 160 in FIG. 1) on a portion of the back face 255 of the electronic device. The second display 240 may be formed on at least a portion of the third surface 213 of the electronic device 200. The electronic device 200 may include a plurality of cameras (e.g., 215, 217, 219, and 225) on the back face 255 of the electronic device 210. For example, the electronic device 200 may have a second camera 215, a third camera 217, and a fourth camera 219, which are disposed on the fourth surface 223, and may have a fifth camera 225 disposed on the third surface 213. According to various embodiments, the second camera 215, the third camera 217, the fourth camera 219, and the fifth camera 225 may have the same or different performances (e.g., angle of view or resolution). For example, the second camera 215 may have an angle of view exceeding 125 degrees (e.g., ultra-wide), the third camera 217 may have an angle of view between 90 degrees and 125 degrees (e.g., wide), the fourth camera 219 may have an angle of view of 90 degrees and a 2x zoom (e.g., tele), and the fifth camera 225 may have an angle of view of 90 degrees and a normal magnification. The electronic device 200 may further include a sensor area 241 on the fourth surface 223. Similar to the sensor module 176 in FIG. 1, an infrared sensor, a fingerprint sensor, or an illuminance sensor may be disposed in the sensor area 241.

According to various embodiments, when the electronic device 200 is in the unfolded state (e.g., FIG. 2A), the first display 230 may be turned on (or activated) and the second display 240 may be turned off (or deactivated). If no user input (e.g., touch or button selection) is detected for a predetermined period of time (e.g., 5 seconds, 10 seconds, or 1 minute) in the state where the first display 230 is turned on, the electronic device 200 may turn off the first display 230. Alternatively, if a user input (e.g., touch or button selection) is detected on the second display 240 in the state where the second display 240 is turned off, the electronic device 200 may turn on the second display 240. According to various embodiments, if the second display 240 is turned on, the first display 230 may be turned off. Alternatively, the electronic device 200 may keep the first display 230 in the on state for a predetermined period of time even if the second display 240 is turned on, and then, if no user input is detected on the first display 230 after a performed period of time elapses, turn off the first display 230.

The electronic device 200 may further include a sensor module (e.g., the sensor module 176 in FIG. 1). For example, the electronic device 200 may include a first sensor module 270 in the first housing 210 and a second sensor module 275 in the second housing 220. The first sensor module 270 or the second sensor module 275 may include at least one of an acceleration sensor, a gyroscope sensor, a geomagnetic sensor, a proximity sensor, a gesture sensor, or a Hall sensor. The acceleration sensor is a sensor that detects velocity, and the gyroscope sensor may detect angular velocity, which is a rotational speed of an object. The geomagnetic sensor is a sensor that detects geomagnetism, and may detect the direction of geomagnetism (e.g., azimuth) such as east, west, south, and north, like a compass. The proximity sensor may detect whether or not an object is close, and the gesture sensor may detect infrared rays. The Hall sensor may detect a change in an electrical signal when a magnetic object approaches or moves away. The Hall sensor may detect a change in the state of an electronic device 200 in an analog or digital manner.

The electronic device 200 may detect the state (e.g., unfolded state, folded state, or intermediate state) of the electronic device 200 using at least one sensor module (e.g., the first sensor module 270, the second sensor module 275, or the third sensor module). In the case where the electronic device 200 is placed such that the front face 250 is arranged as shown, the x-axis of the first sensor module 270 or second sensor module 275 may represent a left/right direction, the y-axis may represent a front/back direction, and the z-axis may represent a height direction. In the case where the electronic device 200 is placed such that the front face 250 is visible, the sensing data (or sensing values or sensing angles) of the x-axis, y-axis, and z-axis measured (or acquired) by the first sensor module 270 or the second sensor module 275 may be the same or similar.

For example, in the case where the electronic device 200 is placed such that the front face 250 is visible, the sensing data of the x-axis and y-axis measured (or acquired) by the first sensor module 270 or the second sensor module 275 may be expressed as an angle of 0 degrees, and the sensing data of the z-axis may be 90 degrees. In the case where the electronic device 200 is placed such that the back face 255 is visible, the sensing data of the x-axis and y-axis measured (or acquired) by the first sensor module 270 or the second sensor module 275 may be 0 degrees, and the sensing data of the z-axis may be -90 degrees. Since the x-axis and y-axis of the inertial sensor are not affected by the direction of gravity, and since the z-axis is affected by the direction of gravity, the z-axis sensing data may be different between the state where the electronic device 200 is placed such that the front face 250 is visible and the state where the electronic device 200 is placed such that the back face 255 is visible.

Referring to FIG. 2B, the electronic device 200 may have a hinge structure 260 configured around the folding axis (e.g., the axis A), so that the front face 250 of the electronic device 200 may be in the folded state (e.g., closed state). FIG. 2B is a drawing showing the third surface 213 of the first housing 210 and the fourth surface 223 of the second housing 220 in the folded state of the electronic device 200.

According to various embodiments, the first display 230 may be turned off and the second display 240 may be turned on in the folded state of the electronic device 200. If no user input is detected for a predetermined period of time in the state where the second display 240 is turned on, the electronic device 200 may turn off the second display 240. When the electronic device 200 is in the folded state and when the second display 240 is turned off, if a button formed (or mounted) on the electronic device 200 is selected, the electronic device 200 may turn on the second display 240. Alternatively, when the electronic device 200 is in the folded state and when a user input is detected on the second display 240 after the second display 240 is turned off, the electronic device 200 may turn on the second display 240.

According to various embodiments, when the electronic device 200 is in the folded state, the sensing data of the z-axis measured (or acquired) by the first sensor module 270 and the second sensor module 275 may be different. For example, in the state where the third surface 213 of the first housing 210 is placed to face the first direction (e.g., a direction opposite the direction of gravity) (e.g., in the state where the fourth surface 223 of the second housing 220 is placed to face the second direction (e.g., the direction of gravity)), the sensing data of the x-axis and y-axis measured by the first sensor module 270 may be 0 degrees, the sensing data of the z-axis may be -90 degrees, the sensing data of the x-axis and y-axis measured by the second sensor module 275 may be 0 degrees, and the sensing data of the z-axis may be 90 degrees. The first direction and the second direction may be opposite directions to each other. In addition, in the state where the fourth surface 223 of the second housing 220 is placed to face the first direction (e.g., in the state where the third surface 213 of the first housing 210 is placed to face the second direction), the sensing data of the x-axis and y-axis measured by the first sensor module 270 may be 0 degrees, the sensing data of the z-axis may be 90 degrees, the sensing data of the x-axis and y-axis measured by the second sensor module 275 may be 0 degrees, and the sensing data of the z-axis may be -90 degrees.

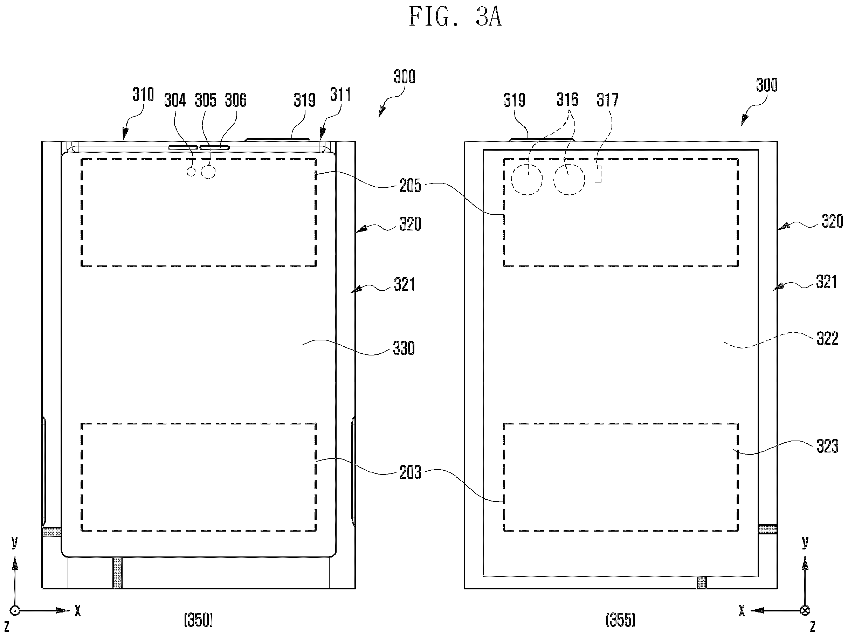

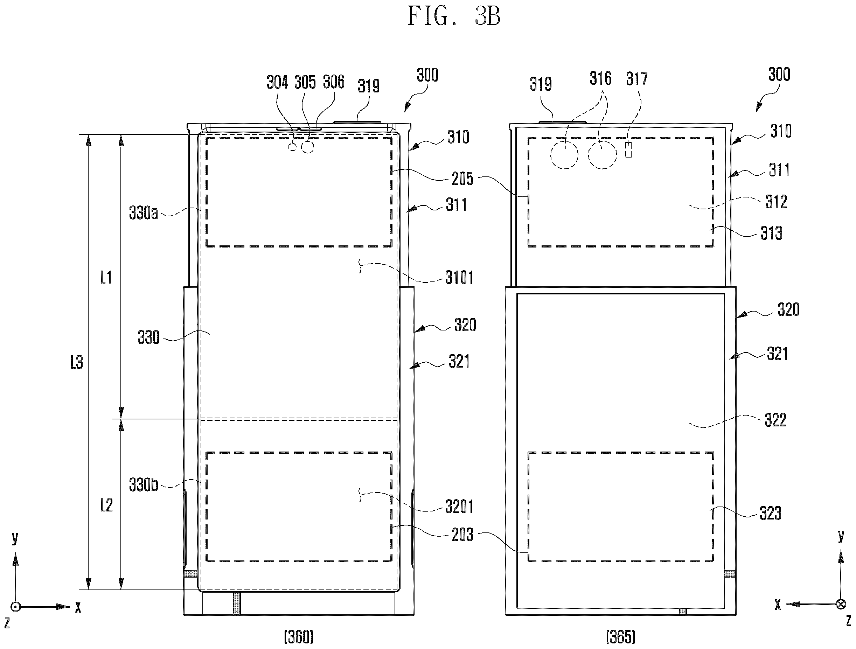

FIG. 3A is a diagram illustrating a front face 350 and a back face 355 of a rollable electronic device 300 when the electronic device is in a closed state according to various embodiments. FIG. 3B is a diagram illustrating a front face 360 and a back face 365 of a flexible electronic device 300 when the electronic device is in an open state according to various embodiments.

The rollable electronic device 300 in FIGS. 3A and 3B may be at least partially similar to the electronic device 101 in FIG. 1, or may include the electronic device 101 in FIG. 1, or may further include other embodiments of the electronic device 101 in FIG. 1.

Referring to FIGS. 3A and 3B, the electronic device 300 may include a first housing 310 (e.g., a first housing structure, a movable portion, or a slide housing), a second housing 320 (e.g., a second housing structure, a fixed portion, or a base housing) that is coupled to the first housing 310 so as to move (e.g., slide) in a specified direction (e.g., the direction ① or the direction ②) (e.g., the y-axis direction), and a flexible display 330 (e.g., an expandable display or a stretchable display) that is disposed to be supported by at least a portion of the first housing 310 and the second housing 320. The first housing 310 may include a first battery 203, and the second housing 320 may include a second battery 205. The first battery 203 and the second battery 205 may have the same size or performance, or may have different sizes or performances.

According to an embodiment, the electronic device 300 may be configured such that the first housing 310 slides out in a first direction (the direction ①) or slides in in a second direction (the direction ②) opposite the first direction (the direction ①) relative to the second housing 320 held by the user. According to an embodiment, at least a portion of the first housing 310 including a first space 3101 may be received inside a second space 3201 of the second housing 320, thereby switching to a closed state (or a slide-in state). According to an embodiment, the electronic device 300 may include a bendable member (or bendable support member) (e.g., a multi-joint hinge module or a multi-bar assembly) that forms at least partially the same plane as at least a portion of the first housing 310 in the open state (or a slide-out state) and is at least partially received inside the second space 3201 of the second housing 320 in the closed state.

According to an embodiment, at least a portion of the flexible display 330 may be received inside the internal space 3201 of the second housing 320 while being supported by the bendable member in the closed state and then disposed to be invisible from the outside. According to an embodiment, at least a portion of the flexible display 330 may be disposed to be visible from the outside by being supported by the bendable member that forms at least partially the same plane as the first housing 310 in the open state.

According to various embodiments, the electronic device 300 may include a first housing 310 including a first side member 311 and a second housing 320 including a second side member 321. According to an embodiment, the first side member 311 may include a first side surface having a first length along a first direction (e.g., the y-axis direction) and a second side surface extending from the first side surface to have a second length, which is shorter than the first length, along a direction (e.g., the x-axis direction) substantially perpendicular to the first side surface. According to an embodiment, the first side member 311 may be formed at least partially of a conductive material (e.g., metal).

In a certain embodiment, the first side member 311 may be formed by a combination of a conductive material and a non-conductive material (e.g., polymer). According to an embodiment, the first housing 310 may include a first support member 312 extending from at least a portion of the first side member 311 to at least a portion of the first space 3101. According to an embodiment, the first support member 312 may be formed integrally with the first side member 311. In a certain embodiment, the first support member 312 may be formed separately from the first side member 311 and may be structurally coupled to the first side member 311.

According to various embodiments, the second side member 321 may include a fourth side surface that corresponds at least partially to the first side surface and has a third length, a fifth side surface that extends from the fourth side surface in a direction substantially parallel to the second side surface and has a fourth length shorter than the third length, and a sixth side surface that extends from the fifth side surface to correspond to the third side surface and has the third length. According to an embodiment, the second side member 321 may be formed at least partially of a conductive material (e.g., metal). In a certain embodiment, the second side member 321 may be formed by a combination of a conductive material and a non-conductive material (e.g., polymer). According to an embodiment, at least a portion of the second side member 321 may include a second support member 322 that extends to at least a portion of the second space 3201 of the second housing 320. According to an embodiment, the second support member 322 may be formed integrally with the second side member 321. In a certain embodiment, the second support member 322 may be configured separately from the second side member 321, and may be structurally coupled to the second side member 321.

According to an embodiment, in the closed state, the first support member 312 may be disposed to overlap the second support member 322 so as to be substantially invisible from the outside. In a certain embodiment, a portion of the first support member 312 may be disposed to overlap the second support member 322 in the closed state so as to be invisible from the outside, and the remaining portion of the first support member 312 may be disposed to be visible from the outside.

According to various embodiments, the electronic device 300 may include a first back cover 313 coupled to the first housing 310 on the back. According to an embodiment, the first back cover 313 may be disposed through at least a portion of the first support member 312. In a certain embodiment, the first back cover 313 may be formed integrally with the first side member 311. In a certain embodiment, the first back cover 313 may extend to at least a portion of the first side member 311. In a certain embodiment, at least a portion of the first support member 312 may be replaced by the first back cover 313.

According to various embodiments, the electronic device 300 may include a second back cover 323 coupled to the second housing 320 on the back face 355 or 365. According to an embodiment, the second back cover 323 may be positioned through at least a portion of the second support member 322. In a certain embodiment, the second back cover 323 may be formed integrally with the second side member 321. In a certain embodiment, the second back cover 323 may extend to at least a portion of the second side member 321. In a certain embodiment, at least a portion of the second support member 322 may be replaced by the second back cover 323.

According to various embodiments, the electronic device 300 may include a flexible display 330 positioned to be supported by at least a portion of the first housing 310 and second housing 320. According to an embodiment, the flexible display 330 may include a first portion 330a (e.g., a flat portion) that is always visible from the outside and a second portion 330b (e.g., a bendable portion) that extends from the first portion 330a and is at least partially received into the second space 3201 of the second housing 320 such that at least a portion thereof is not visible from the outside in the closed state. According to an embodiment, the first portion 330a may be disposed to be supported by the first housing 310, and the second portion 330b may be disposed to be supported at least partially by the bendable member.

According to an embodiment, in the state in which the first housing 310 slides out along the first direction (direction ①), the second portion 330b of the flexible display 330 may be disposed to extend from the first portion 330a while being supported by the bendable member so as to form a substantially same plane as the first portion 330a and be visible from the outside. According to an embodiment, in the state in which the second housing 320 slides in along the second direction (direction ②), the second portion 330b of the flexible display 330 may be disposed to be received inside the second space 3201 of the second housing 320 so as not to be visible from the outside. Accordingly, the electronic device 300 may induce the display area of the flexible display 330 to be variable as the first housing 310 slides along a designated direction (e.g., the y-axis direction) from the second housing 320.

According to various embodiments, the length of the flexible display 330 may vary in the first direction (direction ①) as the first housing 310 slides relative to the second housing 320. For example, the flexible display 330 may have a first display area (e.g., an area corresponding to the first portion 330a) corresponding to a first length L1 in the closed state. According to an embodiment, since the first housing 310 further slides by a second length L2 relative to the second housing 320 in the open state, the flexible display 330 may be expanded to have a third display area (e.g., an area including the first portion 330a and the second portion 330b) that corresponds to a third length L3 greater than the first length L1 and is greater than the first display area.

According to various embodiments, the electronic device 300 may include at least one of an input device (e.g., a microphone), an audio output device (e.g., a call receiver 306 or a speaker), sensor modules 304 and 317, a camera module (e.g., a first camera module 305 or a second camera module 316), a connector port, a key input device 319, or an indicator (not shown) disposed in the first space 3101 of the first housing 310. According to an embodiment, the electronic device 300 may include another input device (e.g., a microphone) disposed in the second housing 320. In another embodiment, the electronic device 300 may be configured to exclude at least one of the above-described components or further include other components. In another embodiment, at least one of the above-described components may be disposed in the second space 3201 of the second housing 320.

According to various embodiments, the sensor modules 304 and 317 may generate electric signals or data values corresponding to an internal operating state of the electronic device 300 or an external environmental state. The sensor modules 304 and 317 may include, for example, a first sensor module 304 (e.g., a proximity sensor or an illuminance sensor) disposed on the front face of the electronic device 300 and/or a second sensor module 317 (e.g., a heart rate monitoring (HRM) sensor) disposed on the back face of the electronic device 300. According to an embodiment, the first sensor module 304 may be disposed under the flexible display 330 on the front face of the electronic device 300. According to an embodiment, the first sensor module 304 and/or the second sensor module 317 may include at least one of a proximity sensor, an illuminance sensor, a TOF (time-of-flight) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera modules may include a first camera module 305 disposed on the front face of the electronic device 300 and a second camera module 316 disposed on the back face of the electronic device 300. According to an embodiment, the electronic device 300 may also include a flash (not shown) positioned near the second camera module 316. According to an embodiment, the camera modules 305 and 316 may include one or more lenses, an image sensor, and/or an image signal processor. According to an embodiment, the first camera module 305 may be disposed under the flexible display 330 and configured to capture an object through a portion of an active area (e.g., the display area) of the flexible display 330.

According to various embodiments, the first camera module 305 of the camera modules and some sensor modules 304 of the sensor modules 304 and 317 may be disposed to detect an external environment through the flexible display 330. For example, the first camera module 305 or some sensor modules 304 may be disposed in the first space 3201 of the first housing 310 so as to communicate with the external environment through a transparent area or a perforated opening formed in the flexible display 330. According to an embodiment, the area of the flexible display 330 facing the first camera module 305 is a portion of the display area displaying content, which may be formed as a transparent area having a specified transmittance.

According to an embodiment, the transparent area may be formed to have a transmittance in the range of about 5% to about 20%. This transparent area may include an area overlapping an effective area (e.g., an area of angle-of-view) of the first camera module 305 through which light passes to reach the image sensor to produce an image. For example, the transparent area of the flexible display 330 may include an area having a lower pixel arrangement density and/or wiring density than the surrounding area. For example, the transparent area may replace the opening described above. For example, some camera modules 305 may include an under-display camera (UDC). In a certain embodiment, some sensor modules 304 may be disposed the internal space of the electronic device 300 to perform their functions without being visually exposed through the flexible display 330.

According to various embodiments, the electronic device 300 may include at least one antenna (e.g., the antenna module 197 in FIG. 1) electrically connected to a wireless communication circuit (e.g., the wireless communication module 192 in FIG. 1) disposed in the second housing 310. According to an embodiment, the electronic device 300 may also include a bezel antenna (A) disposed through the conductive second side member 321 of the second housing 310. For example, the bezel antenna (A) may include a conductive part that is disposed on at least a portion of the second side member 321 and electrically segmented through at least one segment formed of a non-conductive material (e.g., polymer).

According to various embodiments, the slide-in/slide-out operation of the electronic device 300 may be performed automatically. For example, the slide-in/slide-out operation of the electronic device 300 may be performed by a gearing operation between a driving motor including a pinion gear disposed in the first space 3101 of the first housing 310 and a rack gear disposed in the second space 3201 of the second housing 320 and meshed with the pinion gear. For example, a processor (e.g., the processor 120 in FIG. 1) of the electronic device 300 may operate the driving motor disposed inside the electronic device 300 when detecting a triggering action for switching from the closed state to the open state or from the open state to the closed state. According to an embodiment, the triggering action may include selecting (e.g., touching) an object displayed on the flexible display 330 or manipulating a physical button (e.g., a key button) included in the electronic device 300.

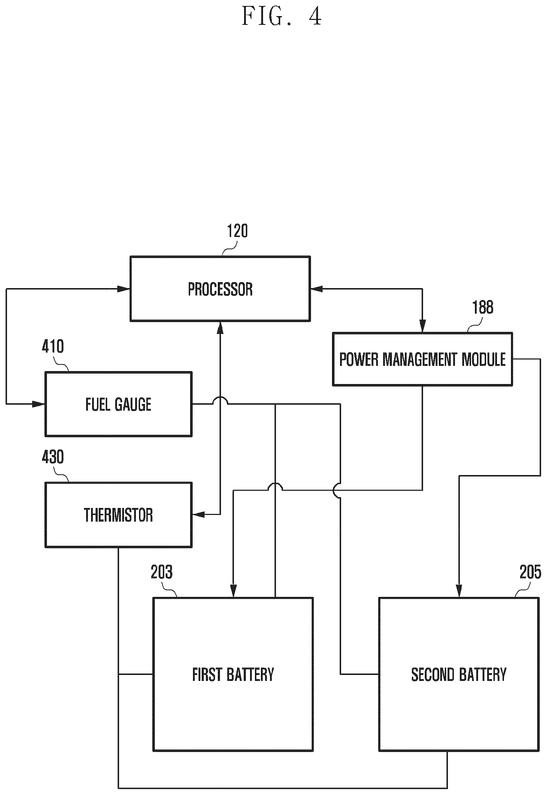

FIG. 4 is a diagram illustrating the configuration of an electronic device according to various embodiments.

Referring to FIG. 4, an electronic device (e.g., the electronic device 101 in FIG. 1, the electronic device 200 in FIGS. 2A and 2B, or the electronic device 300 in FIGS. 3A and 3B) according to various embodiments may include a processor (e.g., the processor 120 in FIG. 1), a power management module (e.g., the power management module 188 in FIG. 1), a fuel gauge 410, a thermistor 430, a first battery 203 (e.g., the battery 189 in FIG. 1 or the first battery 203 in FIGS. 2A to 3B), or a second battery 205 (e.g., the battery 189 in FIG. 1 or the second battery 205 in FIGS. 2A to 3B). Although one fuel gauge 410 or thermistor 430 is shown in the drawing, the fuel gauge 410 or thermistor 430 may be disposed for each battery. For example, the electronic device 101 may include a first fuel gauge or a first thermistor corresponding to the first battery 203, and a second fuel gauge or a second thermistor corresponding to the second battery 205. This is merely an implementation issue, and the disclosure is not limited thereto.

The processor 120 may form an electrical path with the power management module 188, the fuel gauge 410, or thermistor 430. The power management module 188 may form an electrical path with the fuel gauge 410, the first battery 203, or the second battery 205. The power management module 188 may receive power from the outside and charge the first battery 203 or the second battery 205.

The fuel gauge 410 may obtain state information of the first battery 203 or second battery 205 and transmit the same to the processor 120. The state information of the first battery 203 or second battery 205 may include at least one of the temperature, the charging current, the discharging current, the remaining capacity, or the SoC (state of charging) corresponding to the first battery 203 or the second battery 205.

The thermistor 430 may measure (or monitor) the temperature of the first battery 203 or the second battery 205. The thermistor 430 may transmit the temperature of the first battery 203 or second battery 205 periodically or in real time to the fuel gauge 410 or the processor 120.

The processor 120 may periodically read values from the thermistor 430. The processor 120 may store the state information of the first battery 203 obtained from the fuel gauge 410 in a memory (e.g., the memory 130 in FIG. 1) or calculate the remaining capacity of the first battery 203, based on the state information of the first battery 203. In addition, the processor 120 may store the state information of the second battery 205 obtained from the fuel gauge 410 in the memory 130 or calculate the remaining capacity of the second battery 205, based on the state information of the second battery 205.

According to various embodiments, the first battery 203 or the second battery 205 may be disposed to be spaced apart from each other. For example, in the case where a flexible display (e.g., the display module 160 in FIG. 1) is folded for use, such as in a foldable electronic device (e.g., the foldable electronic device 200 in FIGS. 2A and 2B), the first battery 203 or the second battery 205 may be disposed on both sides of a folding axis. Alternatively, in the case where two housings are movably coupled to each other, such as in a rollable electronic device (e.g., the rollable electronic device 300 in FIGS. 3A and 3B), the first battery 203 or the second battery 205 may be disposed in each housing.

According to various embodiments, the capacities of the first battery 203 or the second battery 205 may be the same or different. If the capacities of the first battery 203 or the second battery 205 are different, a capacity ratio of the first battery 203 or a capacity ratio of the second battery 205 to the total capacity of all batteries may be stored in the memory 130. Alternatively, the processor 120 may determine the capacity ratio of each battery through the absolute capacity of each battery identified by the fuel gauge 410. The processor 120 may calculate the total capacity of all batteries, based on the remaining capacity of the first battery 203 and the remaining capacity of the second battery 205. The processor 120 may store the remaining capacity of the first battery 203, the remaining capacity of the second battery 205, or the total capacity of all batteries in the memory 130.

An electronic device (e.g., the electronic device 101 in FIG. 1, the electronic device 200 in FIGS. 2A and 2B, or the electronic device 300 in FIGS. 3A and 3B) according to various embodiments of the disclosure may include a first housing, a second housing configured to be movable relative to the first housing (e.g., the first housing 210 in FIGS. 2A and 2B or the first housing 310 in FIGS. 3A and 3B), a second housing (e.g., the second housing 220 in FIGS. 2A and 2B or the second housing 320 in FIGS. 3A and 3B) configured to be movable relative to the first housing, a first battery (e.g., the first battery 203 in FIGS. 2A to 3B) disposed in the first housing, a second battery (e.g., the second battery 205 in FIGS. 2A to 3B) disposed in the second housing, a memory (e.g., the memory 130 in FIG. 1), and a processor (e.g., the processor 120 in FIG. 1) operatively connected to at least one of the first battery, the second battery, or the memory, wherein the processor may be configured to monitor a state of the first battery, a state of the second battery, and a state of the electronic device, determine whether or not the state of the first battery or the second battery meets configured conditions, determine, if the state of the first battery or the second battery meets the configured conditions, to preferentially use one of the first battery or the second battery, based on a battery arrangement structure, and control the battery determined to be preferentially used, based on the state of the electronic device.

The "controlling" of the battery determined to be preferentially used may include "changing or maintaining" the battery determined to be preferentially used.

The processor may be configured to determine that the state of the first battery or the second battery meets the configured conditions if a remaining capacity of the first battery or the second battery is less than a configured reference capacity, or if a difference in remaining capacity between the first battery and the second battery exceeds a configured capacity difference.

The processor may be configured to store, in the memory, an expected load of a component disposed in the first housing or an expected load of a component disposed in the second housing and determine to preferentially use one of the first battery or the second battery, based on the expected load stored in the memory.

The processor may be configured to determine to preferentially use the second battery disposed in the second housing if the expected load of the component disposed in the first housing is higher than the expected load of the component disposed in the second housing, and determine to preferentially use the first battery disposed in the first housing if the expected load of the component disposed in the first housing is lower than the expected load of the component disposed in the second housing.

The state of the electronic device may include at least one of a signal intensity of the electronic device, a grip state of the electronic device, or a battery temperature, and the processor may be configured to change or maintain the battery determined to be preferentially used, based on at least one of the signal intensity of the electronic device, the grip state of the electronic device, or the battery temperature.

The processor may be configured to measure the signal intensity of the electronic device received through a communication module (e.g., the communication module 190 in FIG. 1) of the electronic device and, if the measured signal intensity of the electronic device is less than a configured signal value, determine to preferentially use a battery spaced apart from the antenna.

The processor may be configured to perform change to preferentially use the second battery included in the second housing spaced apart from the antenna if the signal intensity of the electronic device is less than a configured signal value while using the first battery included in the first housing including the antenna, based on the battery arrangement structure.

The processor may be configured to maintain the second battery determined to be preferentially used if the signal intensity of the electronic device is less than a configured signal value while using the second battery included in the second housing spaced apart from the antenna, based on the battery arrangement structure.

The processor may be configured to detect the grip state of the electronic device through a grip sensor (e.g., the sensor module 176 in FIG. 1) of the electronic device and determine to preferentially use a battery included in a housing that is not held, based on the grip state of the electronic device.

The processor may be configured to perform change to preferentially use the second battery included in the second housing if a user holds the first housing after the first battery is determined to be preferentially used according to the battery arrangement structure.

The processor may be configured to maintain the second battery that is determined to be preferentially used if a user holds the first housing after the second battery is determined to be preferentially used according to the battery arrangement structure.

The processor may be configured to determine whether or not the battery to be preferentially used needs to be changed according to the grip state of the electronic device after the second battery is determined to be preferentially used, based on the signal intensity of the electronic device, and change the battery to be preferentially used or maintain the battery to be preferentially used, based on a result of the determination.

The processor may be configured to change the battery to be preferentially used to the first battery according to the grip state of the electronic device after the second battery is determined to be preferentially used, based on the signal intensity of the electronic device.

The processor may be configured to monitor a temperature of the first battery preferentially being used, based on the battery arrangement structure, determine whether the temperature of the first battery is equal to or higher than a configured temperature value, monitor the grip state of the electronic device if the temperature of the first battery is equal to or higher than the configured temperature value, and determine whether or not the battery to be preferentially used needs to be changed, based on the grip state of the electronic device.

The processor may be configured to change the battery to be preferentially used to the second battery if the battery to be preferentially used needs to be changed, based on the grip state of the electronic device, identify a signal intensity of the electronic device if the battery to be preferentially used does not need to be changed, based on the grip state of the electronic device, determine whether or not the signal intensity of the electronic device is less than a configured signal value, determine whether or not the battery to be preferentially used needs to be changed, based on a result of the determination, and if the battery to be preferentially used needs to be changed, change the battery to be preferentially used to the second battery.

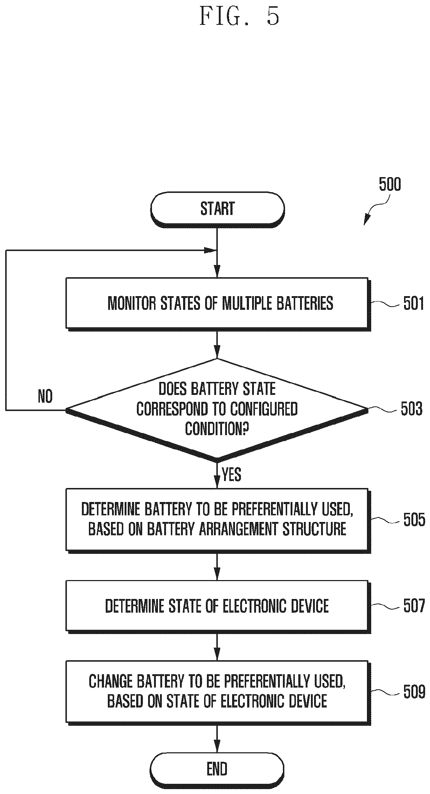

FIG. 5 is a flowchart 500 illustrating an operating method of an electronic device according to various embodiments.

Referring to FIG. 5, in operation 501, a processor (e.g., the processor 120 in FIG. 1) of an electronic device (e.g., the electronic device 101 in FIG. 1, the electronic device 200 in FIGS. 2A and 2B, or the electronic device 300 in FIGS. 3A and 3B) according to various embodiments may monitor the states of multiple batteries (e.g., the battery 189 in FIG. 1). The electronic device 101 may include at least two batteries. For example, in the case where a flexible display (e.g., the display module 160 in FIG. 1) is folded for use, such as in a foldable electronic device (e.g., the foldable electronic device 200 in FIGS. 2A and 2B), a first battery (e.g., the first battery 203 in FIGS. 2A to 3B) or a second battery (e.g., the second battery 205 in FIGS. 2A to 3B) may be disposed on both sides of a folding axis. Alternatively, in the case where two housings are movably coupled to each other, such as in a rollable electronic device (e.g., the rollable electronic device 300 in FIGS. 3A and 3B), the first battery 203 or the second battery 205 may be disposed in each housing.

The processor 120 may monitor the states of multiple batteries through a fuel gauge (e.g., the fuel gauge 410 in FIG. 4). For example, battery state information may include at least one of a temperature, a charge current, a discharge current, a remaining capacity, or an SoC corresponding to the first battery 203 or the second battery 205. In addition, the processor 120 may monitor the state of the electronic device 101. That is, when monitoring the states of multiple batteries, the processor 120 may also monitor the state of the electronic device 101.

In operation 503, the processor 120 may determine whether or not the states of multiple batteries meet configured conditions. The configured conditions may include a case where the remaining capacity of the first battery 203 or second battery 205 is less than a configured reference capacity or a case where the difference in remaining capacity between the first battery 203 and the second battery 205 exceeds a configured capacity difference. For example, if the remaining capacity of the first battery 203 or second battery 205 is less than 50%, the processor 120 may determine that the states of multiple batteries meet the configured conditions. Alternatively, if the difference in remaining capacity between the first battery 203 and the second battery 205 exceeds 20%, the processor 120 may determine that the states of multiple batteries meet the configured conditions. The above-described numerical values are merely examples to help understanding of the disclosure, and the disclosure is not limited thereto.

The processor 120 may perform operation 505 if the states of multiple batteries meet the configured conditions, and may return to operation 501 if the states of multiple batteries do not meet configured conditions. If the states of multiple batteries do not meet the configured conditions, the processor 120 may return to operation 501 and monitor the states of multiple batteries.

If the states of multiple batteries meet the configured conditions, the processor 120 may determine a battery to be preferentially used, based on a battery arrangement structure in operation 505. The electronic device 101 may include components (or elements) such as the processor 120, a camera (e.g., the camera module 180 in FIG. 1), an antenna (e.g., the antenna module 197 in FIG. 1), and a battery disposed therein. The components may have different degrees of load on the electronic device 101, and if many components are disposed, the load on the electronic device 101 may be large. For example, the main PCB may have a greater load on the electronic device 101 than the antenna. Therefore, the components may be efficiently disposed in the electronic device 101 to reduce the load on the electronic device 101 while increasing the operating performance between the components.

The first battery 203 may be disposed in a first housing (e.g., the first housing 210 in FIGS. 2A and 2B), and the second battery 205 may be disposed in a second housing (e.g., the second housing 220 in FIGS. 2A and 2B). The components disposed in the first housing 210 or the second housing 220 may be different, and the degree of load applied to the electronic device 101 may vary depending on the disposed components. A memory (e.g., the memory 130 in FIG. 1) of the electronic device 101 may store an expected load amount, based on the components disposed in the first housing 210 or the second housing 220. The battery arrangement structure may be associated with an expected load stored in the memory 130. The processor 120 may determine a battery to be preferentially used among the first battery 203 or the second battery 205, based on the expected load stored in the memory 130.

For example, if the expected load of a component disposed in the first housing 210 is higher than the expected load of a component disposed in the second housing 220, the processor 120 may determine to preferentially use the second battery 205 disposed in the second housing 220 first. The processor 120 may perform control such that the second battery 205, which is determined to be preferentially used, is used before the first battery 203. On the other hand, if the expected load of a component disposed in the first housing 210 is less than the expected load of a component disposed in the second housing 220, the processor 120 may determine to preferentially use the first battery 203 disposed in the first housing 210. The processor 120 may perform control such that the first battery 203, which is determined to be preferentially used, is used before the second battery 205.

In operation 507, the processor 120 may determine the state of the electronic device 101. The processor 120 may determine a parameter of the electronic device 101 that may affect the battery use as the state of the electronic device 101. For example, the state of the electronic device 101 may include at least one of the signal intensity of the electronic device 101, the grip state of the electronic device 101, or the battery temperature. If the signal intensity (received signal strength indication (RSSI)) of the electronic device 101 is low (e.g., if the signal intensity is less than a configured signal value), a large load may be applied to the antenna. The processor 120 may measure the signal intensity received through the communication module (e.g., the communication module 190 in FIG. 1). According to an embodiment, operation 507 may be performed in parallel with operation 501.

If a user grasps (holds) an electronic device 101, the battery temperature of the held housing may be higher than the battery temperature of the housing not held due to the user's body temperature. The processor 120 may detect the grip state of the electronic device 101 through a grip sensor (e.g., the sensor module 176 in FIG. 1). Alternatively, since the battery temperature drops in a cold environment such as outdoors in winter, the battery efficiency may be lowered. The processor 120 may obtain the temperature of the first battery 203 or second battery 205 from a thermistor (e.g., the thermistor 430 in FIG. 4). The processor 120 may determine whether the battery temperature falls below a first temperature reference value or rises to a second temperature reference value or more. The first temperature reference value may be less than the second temperature reference value.

In operation 509, the processor 120 may control (change or maintain) the battery to be preferentially used, based on the state of the electronic device 101. For example, the processor 120 may determine to preferentially use the first battery 203 in operation 505, determine (or monitor) the state of the electronic device 101 while preferentially using the first battery 203, and determine to preferentially use the second battery 205, based on the determination result. Alternatively, the processor 120 may determine to preferentially use the second battery 205 in operation 505, determine the state of the electronic device 101 while preferentially using the second battery 205, and determine to preferentially use the first battery 203, based on the determination result.

According to various embodiments, the "controlling" of the battery determined to be preferentially used may include "changing or maintaining" the battery determined to be preferentially used.

According to various embodiments, the antenna may be disposed in the first housing 210, and if the signal intensity of the electronic device 101 is less than a configured signal value while the first battery 203 is being preferentially used, the processor 120 may perform change to preferentially use the second battery 205 disposed in the second housing 220 that is spaced apart from the antenna. Alternatively, if the user holds the first housing 210 while the first battery 203 disposed in the first housing 210 is being preferentially used, the processor 120 may perform change to preferentially use the second battery 205 disposed in the second housing 220 that is not held by the user.

According to various embodiments, if the temperature of the first battery 203 or second battery 205 falls below a first temperature reference value, the processor 120 may perform change to preferentially use the battery of which the temperature has fallen below the first temperature reference value. Since the battery efficiency decreases when the battery temperature is low, the processor 120 may perform change to preferentially use the battery of which the temperature has fallen below the first temperature reference value in order to increase the battery temperature. When the battery is used, the battery generates heat, so the battery temperature increases due to the heat generated from the battery, which may improve the battery efficiency.

According to various embodiments, if the temperature of the first battery 203 or second battery 205 rises to a second temperature reference value or more, the processor 120 may perform change to preferentially use the battery that does not rise to the second temperature reference value or more. If the battery temperature rises to the second temperature reference value or more, the battery efficiency may deteriorate. The processor 120 may perform change to preferentially use the battery that has not risen to the second temperature reference value or more, instead of the battery that has risen to the second temperature reference value or more, in order to lower the battery temperature that has risen to the second temperature reference value or more.

According to various embodiments, the processor 120 may preferentially use a battery included in a housing in which a cooler capable of lowering the heat generation of the electronic device 101 is disposed. If the temperature of the electronic device 101 rises to a reference temperature or more, the processor 120 may operate the cooler. The temperature of the battery may be lowered by the operation of the cooler, so the processor 120 may preferentially use the battery included in the housing in which the cooler capable of lowering the heat generation of the electronic device 101 is disposed.

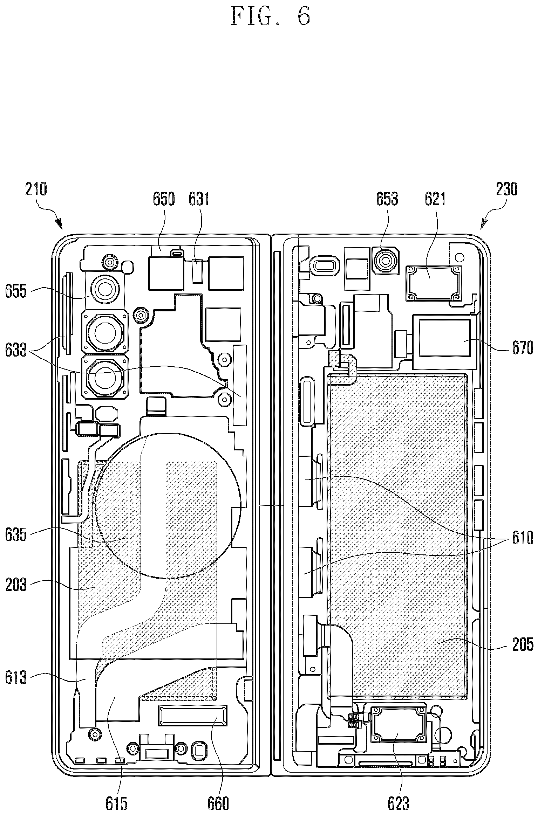

FIG. 6 is a diagram illustrating an example of an arrangement structure of components included in an electronic device according to various embodiments.

Referring to FIG. 6, an electronic device (e.g., the electronic device 101 in FIG. 1, the electronic device 200 in FIGS. 2A and 2B, or the electronic device 300 in FIGS. 3A and 3B) according to various embodiments may include a front camera 650, a first rear camera 655, a UWB antenna 631, a 5G antenna 633, an MST antenna 635, a first battery 203, a flexible-PCB RF cable (FRC) flexible-printed circuit board (FPCB) 613, a USB FPCB 615, or a motor 660 in a first housing (e.g., the first housing 210 in FIGS. 2A and 2B). In addition, the electronic device 101 may include a second rear camera 653, a first speaker 621, a second speaker 623, a SIM slot 670, a second battery 205, or a main FPCB 610 in a second housing (e.g., the second housing 220 in FIGS. 2A and 2B). The components disposed in the first housing 210 or the second housing 220 are merely examples to help understand the disclosure, so the disclosure is not limited thereto.

For example, the second housing 220 in which the main FPCB 610 and the SIM slot 670 are disposed may have a higher expected load of the electronic device 101 than the first housing 210. Alternatively, the first housing 210 in which multiple cameras and multiple antennas are disposed may have a higher expected load of the electronic device 101 than the second housing 220. A memory (e.g., the memory 130 in FIG. 1) of the electronic device 101 may store expected loads based on components disposed in the first housing 210 or the second housing 220.

A processor (e.g., the processor 120 in FIG. 1), based on the expected loads stored in the memory 130, may determine a battery to be preferentially used from among the first battery 203 or the second battery 205. If the states of multiple batteries meet configured conditions, the processor 120 may perform control that the first battery 203 disposed in the first housing 210 with a smaller expected load is to be preferentially used. Alternatively, if the signal intensity of the electronic device 101 is less than a configured signal value, a large load may be applied to the antenna, so the processor 120 may determine to preferentially use the second battery 205 disposed in the second housing 220 spaced apart from the antenna.

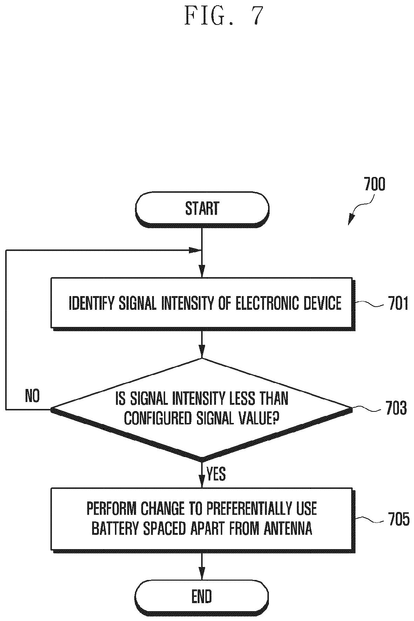

FIG. 7 is a flowchart 700 illustrating a method for changing a battery to be preferentially used depending on a signal intensity in an electronic device according to various embodiments. The operations in FIG. 7 may be details of operation 507 and operation 509 in FIG. 5.

Referring to FIG. 7, in operation 701, a processor (e.g., the processor 120 in FIG. 1) of an electronic device (e.g., the electronic device 101 in FIG. 1, the electronic device 200 in FIGS. 2A and 2B, or the electronic device 300 in FIGS. 3A and 3B) according to various embodiments may identify (or monitor) a signal intensity of the electronic device 101. The processor 120 may measure a signal intensity received through a communication module (e.g., the communication module 190 in FIG. 1). In an area where the signal intensity is low, a large load may occur in the housing where an antenna is located. In general, the radio waves are relatively strong on roads in large cities where users are densely located, and the signal intensity may be usually around -60 to -70 dBm. In the underpasses, the signal intensity may be lower by about 20 dBm than that on roads. In addition, the signal intensity may be reduced to -100 dBm or less in areas where the electronic device 101 is far from the base station. Actually, if the battery use time is measured depending on the signal intensity, the battery use time may increase by about 25% under conditions where the signal intensity is -80 dBm, which is higher than -90 dBm. Therefore, since the signal intensity is a parameter that affects the battery use, the processor 120 may identify the signal intensity of the electronic device 101 in real time or periodically.

In operation 703, the processor 120 may determine whether the signal intensity is less than a configured signal value. The processor 120 may perform operation 705 if the signal intensity is less than the configured signal value, and may return to operation 701 if the signal intensity is greater than or equal to the configured signal value. If the signal intensity is greater than or equal to the configured signal value, the processor 120 may return to operation 701 and monitor the signal intensity of the electronic device 101. The configured signal value may be configured based on the antenna performance. The configured signal value may be stored in a memory (e.g., the memory 130 in FIG. 1).

If the signal intensity is less than the configured signal value, the processor 120 may perform change (or determine) to preferentially use a battery that is spaced apart from the antenna in operation 705. For example, if the signal intensity of the electronic device 101 is less than the configured signal value while the first battery 203 included in the first housing 210 including the antenna is being used, the processor 120 may perform change to preferentially use the second battery 205 included in the second housing 220 spaced apart from the antenna.

For example, if the signal intensity of the electronic device 101 is less than a configured value after the first battery 203 is determined to be preferentially used according to the battery arrangement structure, the processor 120 may perform change to preferentially use the second battery 205 included in the second housing 220 spaced apart from the antenna. Alternatively, if the signal intensity of the electronic device 101 is less than the configured value after the second battery 205 is determined to be preferentially used according to the battery arrangement structure, the processor 120 may maintain the second battery 205 determined to be preferentially used. According to various embodiments, operation 705 may indicate "controlling" the battery determined to be used, which may include, for example, "changing or maintaining" the battery determined to be preferentially used.

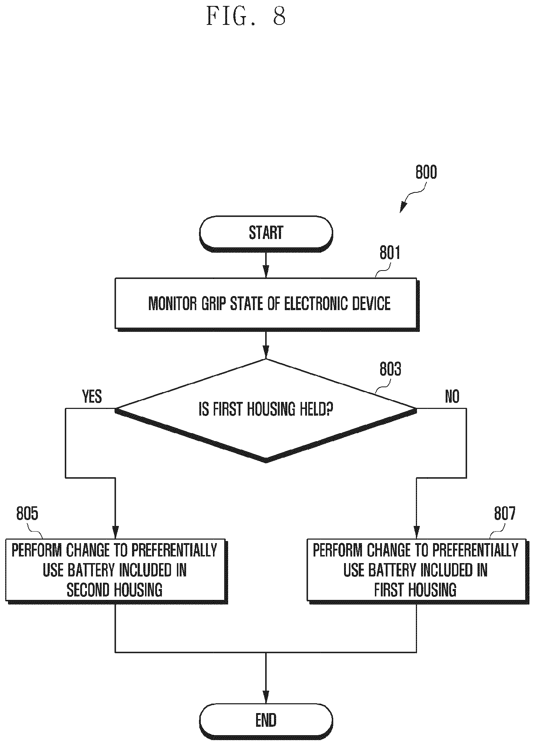

FIG. 8 is a flowchart 800 illustrating a method for changing a battery to be preferentially used depending on a grip state in an electronic device according to various embodiments. The operations in FIG. 8 may be details of operation 507 and operation 509 in FIG. 5.

Referring to FIG. 8, in operation 801, a processor (e.g., the processor 120 in FIG. 1) of an electronic device (e.g., the electronic device 101 in FIG. 1, the electronic device 200 in FIGS. 2A and 2B, or the electronic device 300 in FIGS. 3A and 3B) according to various embodiments may monitor a grip state of the electronic device 101. The processor 120 may detect the grip state of the electronic device 101 through a grip sensor (e.g., the sensor module 176 in FIG. 1). In the case where the electronic device 101 is a foldable electronic device 200, it may include a first housing (e.g., the first housing 210 in FIGS. 2A and 2B) and a second housing (e.g., the second housing 220 in FIGS. 2A and 2B) based on the folding axis. The grip sensor may be included in the first housing 210 or the second housing 220, respectively. The user may hold the first housing 210 or the second housing 220 when the foldable electronic device 200 is in the open state or closed state. The processor 120 may detect a housing having a large contact area with the user from among the first housing 210 or the second housing 220.

In operation 803, the processor 120 may determine whether or not the user holds the first housing 210. Although the drawing shows an operation of determining whether or not the user holds the first housing 210, the processor 120 may also determine whether or not the user holds the second housing 220. The processor 120 may perform operation 805 if the user holds the first housing 210, and perform operation 807 if the user holds the second housing 220.

If the user holds the first housing 210, the processor 120 may perform change (or determine) to preferentially use the second battery 205 included in the second housing 220 in operation 805. The temperature of the battery included in the housing that the user is holding with his hand may be higher than the temperature of the battery included in the housing that the user is not holding. If the battery temperature increases, the battery performance may deteriorate. If the user holds the first housing 210, the processor 120 may determine to preferentially use the second battery 205 included in the second housing 220 that the user is not holding with his hand.

For example, if the user holds the first housing 210 after the first battery 203 is determined to be preferentially used according to the battery arrangement structure, the processor 120 may perform change to preferentially use the second battery 205 included in the second housing 220. Alternatively, if the user holds the first housing 210 after the second battery 205 is determined to be preferentially used according to the battery arrangement structure, the processor 120 may maintain the second battery 205 that is determined to be preferentially used.

If the user holds the second housing 220, the processor 120 may perform change (or determine) to preferentially use the first battery 203 included in the first housing 210 in operation 807. If the user holds the second housing 220, the processor 120 may determine to preferentially use the first battery 203 included in the first housing 210 that the user is not holding with his hand.

For example, if the user holds the second housing 220 after the second battery 205 is determined to be preferentially used according to the battery arrangement structure, the processor 120 may perform change to preferentially use the first battery 203 included in the first housing 210. Alternatively, if the user holds the second housing 220 after the first battery 203 is determined to be preferentially used according to the battery arrangement structure, the processor 120 may maintain the first battery 203 determined to be preferentially used.

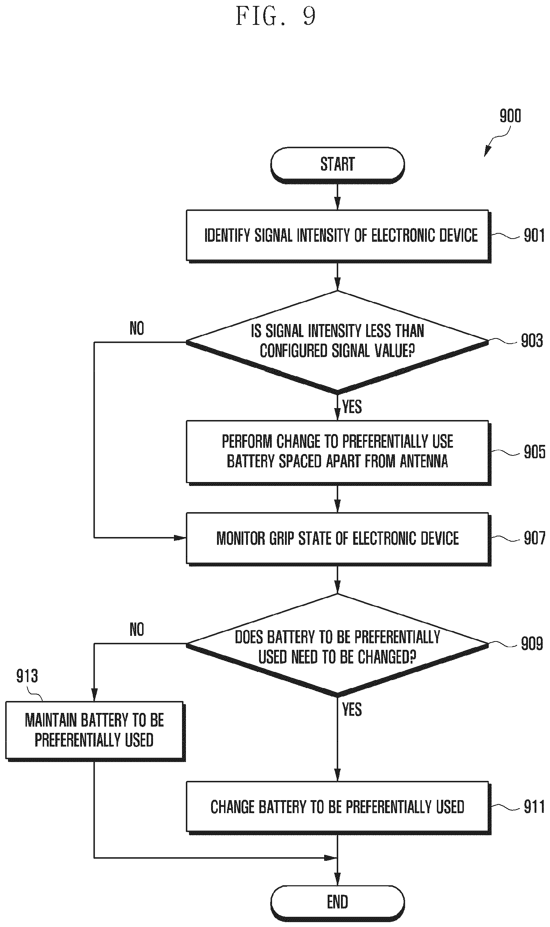

FIG. 9 is a flowchart 900 illustrating a method for improving the use of multiple batteries in an electronic device according to various embodiments.

Referring to FIG. 9, in operation 901, a processor (e.g., the processor 120 in FIG. 1) of an electronic device (e.g., the electronic device 101 in FIG. 1, the electronic device 200 in FIGS. 2A and 2B, or the electronic device 300 in FIGS. 3A and 3B) according to various embodiments may identify a signal intensity of the electronic device 101. The processor 120 may measure a signal intensity received through a communication module (e.g., the communication module 190 in FIG. 1).

In operation 903, the processor 120 may determine whether the signal intensity is less than a configured signal value. The processor 120 may perform operation 905 if the signal intensity is less than the configured signal value, and perform operation 907 if the signal intensity is greater than or equal to the configured signal value. The configured signal value may be configured based on the antenna performance. The configured signal value may be stored in a memory (e.g., the memory 130 in FIG. 1).

If the signal intensity is less than the configured signal value, the processor 120 may perform change to preferentially use a battery spaced apart from the antenna in operation 905. For example, if the signal intensity of the electronic device 101 is less than the configured signal value while the first battery 203 included in the same first housing (e.g., the first housing 210 in FIGS. 2A and 2B) as the antenna is being used, the processor 120 may perform change to preferentially use the second battery 205 included in the second housing (e.g., the second housing 220 in FIGS. 2A and 2B) spaced apart from the antenna. For example, if the signal intensity of the electronic device 101 is less than a configured value after the first battery 203 is determined to be preferentially used according to the battery arrangement structure, the processor 120 may perform change to preferentially use the second battery 205 included in the second housing 220 spaced apart from the antenna. Alternatively, if the signal intensity of the electronic device 101 is less than the configured value after the second battery 205 is determined to be preferentially used according to the battery arrangement structure, the processor 120 may maintain the second battery 205 determined to be preferentially used.

In operation 907, the processor 120 may monitor a grip state of the electronic device 101. The processor 120 may detect the grip state of the electronic device 101 through a grip sensor (e.g., the sensor module 176 in FIG. 1). The processor 120 may monitor the grip state of the electronic device 101 if the signal intensity is equal to or greater than the configured signal value. The processor 120 may detect a housing with a large contact area with the user from among the first housing 210 or the second housing 220.

In operation 909, the processor 120 may determine whether or not the battery to be preferentially used needs to be changed. The processor 120 may determine the battery to be preferentially used, based on the signal intensity of the electronic device 101 or the grip state of the electronic device 101. For example, if the processor 120 determines to preferentially use the first battery 203 according to the state of the electronic device 101 after the second battery 205 is determined to be preferentially used in operation 905, the processor 120 may determine that the battery to be preferentially used needs to be changed. Alternatively, if the processor 120 determines to preferentially use the first battery 203 according to the grip state of the electronic device 101 after the second battery 205 is determined to be preferentially used according to the battery arrangement structure, the processor 120 may determine that the battery to be preferentially used needs to be changed.

The processor 120 may perform operation 911 if the battery to be preferentially used needs to be changed, and perform operation 913 if the battery to be preferentially used does not need to be changed.

If the battery to be preferentially used needs to be changed, the processor 120 may change the battery to be preferentially used in operation 911. For example, the processor 120, after determining to preferentially use the second battery 205, may change the battery to be preferentially used to the first battery 203 according to the grip state of the electronic device 101. Alternatively, the processor 120, after determining to preferentially use the first battery 203, may change the battery to be preferentially used to the second battery 205 according to the grip state of the electronic device 101.

If the battery to be preferentially used does not need to be changed, the processor 120 may maintain the battery to be preferentially used in operation 913. For example, the processor 120, after determining to preferentially use the second battery 205, may maintain the second battery 205 as the battery to be preferentially used according to the grip state of the electronic device 101. Alternatively, the processor 120, after determining to preferentially use the first battery 203, may maintain the first battery 203 as the battery to be preferentially used according to the grip state of the electronic device 101.

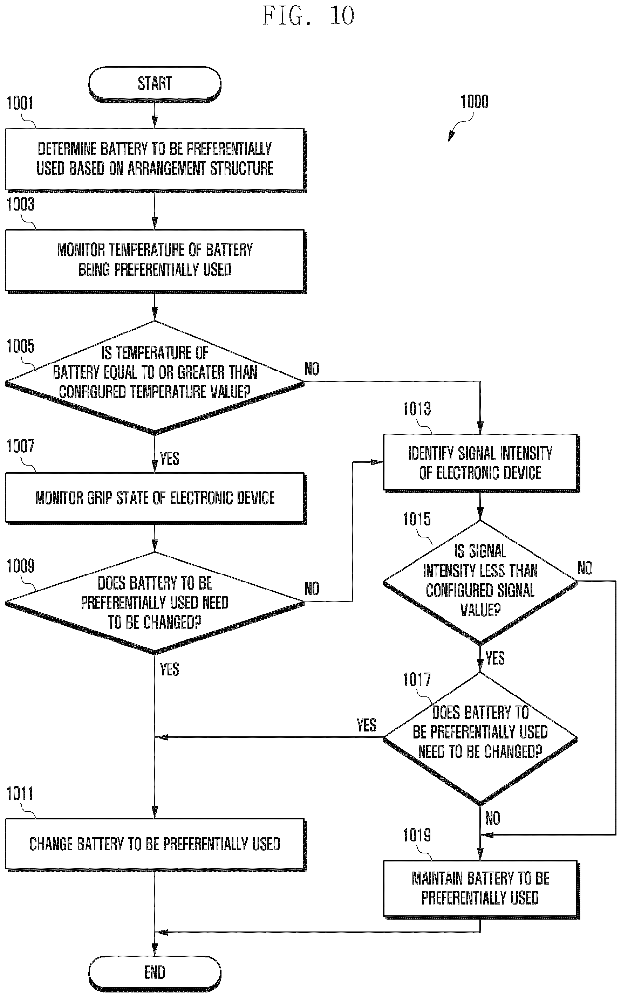

FIG. 10 is another flowchart 1000 illustrating a method for improving the use of multiple batteries in an electronic device according to various embodiments.

Referring to FIG. 10, in operation 1001, a processor (e.g., the processor 120 in FIG. 1) of an electronic device (e.g., the electronic device 101 in FIG. 1, the electronic device 200 in FIGS. 2A and 2B, or the electronic device 300 in FIGS. 3A and 3B) according to various embodiments may determine a battery to be preferentially used, based on a battery arrangement structure. A first battery 203 may be disposed in a first housing (e.g., the first housing 210 in FIG. 2A and FIG. 2B), and a second battery 205 may be disposed in a second housing (e.g., the second housing 220 in FIG. 2A and FIG. 2B). Components disposed in the first housing 210 or the second housing 220 may be different, and the degree of load applied to the electronic device 101 may vary depending on the disposed components. A memory (e.g., the memory 130 in FIG. 1) of the electronic device 101 may store expected loads based on the components disposed in the first housing 210 or the second housing 220. The battery arrangement structure may be associated with the expected loads stored in the memory 130. The processor 120 may determine a battery to be preferentially used from among the first battery 203 or the second battery 205, based on the expected loads stored in the memory 130.

In operation 1003, the processor 120 may monitor a temperature of the battery being preferentially used. The electronic device 101 may include a thermistor (e.g., the thermistor 430 in FIG. 4). The thermistor 430 may measure (or monitor) the temperature of the first battery 203 or the second battery 205. The processor 120 may obtain (or receive) the temperature of the first battery 203 or the second battery 205 periodically or in real time from the thermistor 430.

In operation 1005, the processor 120 may determine whether the temperature of the battery being used is equal to or greater than a configured temperature value. The battery may be greatly affected by the temperature, and if the placement positions of the first battery 203 and the second battery 205 are different, the temperatures of the first battery 203 and the second battery 205 may be different. If it is determined to preferentially use one of the multiple batteries, the temperature of the battery being used may be higher than the temperature of the battery not being used. In addition, the temperatures of the first battery 203 and the second battery 205 may be different depending on the signal intensity of the electronic device 101 or the grip state of the electronic device 101.

If the temperature of the battery being used is equal to or greater than the configured temperature value, the processor 120 may monitor the grip state of the electronic device 101 in operation 1007. The processor 120 may detect the grip state of the electronic device 101 through a grip sensor (e.g., the sensor module 176 in FIG. 1). For example, the processor 120 may detect a housing having a large contact area with the user from among the first housing 210 or the second housing 220.

In operation 1009, the processor 120 may determine whether or not the battery to be preferentially used needs to be changed based on the grip state of the electronic device 101. For example, if the temperature of the first battery 203 is equal to or greater than the configured temperature value while the first battery 203 is being preferentially used and if the user holds the first housing 210, the processor 120 may determine that the battery to be preferentially used needs to be changed. Alternatively, if the temperature of the first battery 203 is equal to or greater than the configured temperature value while the first battery 203 is being preferentially used and if the user holds the second housing 220, the processor 120 may determine that the battery to be preferentially used does not need to be changed. If the temperature of the first battery 203 is equal to or greater than the configured temperature value while the first battery 203 is being preferentially used and if the user holds the second housing 220, the processor 120 may also determine that the battery to be preferentially used needs to be changed.

Alternatively, if the temperature of the second battery 205 is equal to or greater than a configured temperature value while the second battery 205 is being preferentially used and if the user holds the second housing 220, the processor 120 may determine that the battery to be preferentially used needs to be changed. Alternatively, if the temperature of the second battery 205 is equal to or greater than the configured temperature value while the second battery 205 is being preferentially used and if the user holds the first housing 210, the processor 120 may determine that the battery to be preferentially used does not need to be changed. If the temperature of the second battery 205 is equal to or greater than the configured temperature value while the second battery 205 is being preferentially used and if the user holds the first housing 210, the processor 120 may also determine that the battery to be preferentially used needs to be changed.

The processor 120 may perform operation 1011 if the battery to be preferentially used needs to be changed, and perform operation 1013 if the battery to be preferentially used does not need to be changed. If the battery to be preferentially used needs to be changed, the processor 120 may change the battery to be preferentially used in operation 1011.

If the temperature of the first battery 203 is equal to or greater than the configured temperature value while the first battery 203 is preferentially being used, and if the user holds the first housing 210, the processor 120 may change the battery to be preferentially used to the second battery 205. If the temperature of the first battery 203 is equal to or greater than the configured temperature value while the first battery 203 is preferentially being used, and if the user holds the second housing 220, the processor 120 may change the battery to be preferentially used to the second battery 205. If the temperature of the second battery 205 is equal to or greater than the configured temperature value while the second battery 205 is preferentially being used, and if the user holds the second housing 220, the processor 120 may change the battery to be preferentially used to the first battery 203.

If the temperature of the battery being used is less than the configured temperature value, or if the battery to be preferentially used does not need to be changed, the processor 120 may identify a signal intensity of the electronic device 101 in operation 1013. The processor 120 may measure the signal intensity received through a communication module (e.g., the communication module 190 in FIG. 1).

In operation 1015, the processor 120 may determine whether the signal intensity is less than a configured signal value. The processor 120 may perform operation 1017 if the signal intensity is less than the configured signal value, and perform operation 1019 if the signal intensity is equal to or greater than the configured signal value.

If the signal intensity is less than the configured signal value, the processor 120 may determine whether the battery to be preferentially used needs to be changed in operation 1017. For example, if the temperature of the first battery 203 is less than the configured temperature value while the first battery 203 is preferentially being used, and if the signal intensity of the electronic device 101 is less than the configured signal value, the processor 120 may determine that the battery to be preferentially used needs to be changed. Alternatively, if the temperature of the first battery 203 is equal to or greater than the configured temperature value while the first battery 203 is preferentially being used, and if the signal intensity of the electronic device 101 is less than the configured signal value, the processor 120 may determine that the battery to be preferentially used needs to be changed.

In the case where the electronic device 101 includes an antenna (e.g., the UWB antenna 631, the 5G antenna 633, or the MST antenna 635 in FIG. 6) in the first housing 210, and if the signal intensity of the electronic device 101 is less than the configured signal value, a large load may occur on the antenna. If a load occurs on the antenna, the temperature of the battery adjacent to the antenna may increase, affecting the battery state, so the processor 120 may change the battery to be preferentially used if the signal intensity of the electronic device 101 is less than the configured signal value.

The processor 120 may perform operation 1011 if the battery to be preferentially used needs to be changed, and perform operation 1019 if the battery to be preferentially used does not need to be changed.

If the battery to be preferentially used does not need to be changed, the processor 120 may maintain the battery to be preferentially used in operation 1019. If the temperature of the second battery 205 is less than the configured temperature value while the second battery 205 is preferentially being used, and if the signal intensity of the electronic device 101 is less than the configured signal value, the processor 120 may maintain the second battery 205 preferentially being used. If the temperature of the second battery 205 is equal to or greater than the configured temperature value while the second battery 205 is preferentially being used, and if the signal intensity of the electronic device 101 is less than the configured signal value, the processor 120 may maintain the second battery 205 preferentially being used.

An operating method of an electronic device (e.g., the electronic device 101 in FIG. 1, the electronic device 200 in FIGS. 2A and 2B, or the electronic device 300 in FIGS. 3A and 3B), according to various embodiments of the disclosure, including a first battery (e.g., the first battery 203 in FIGS. 2A to 3B) disposed in a first housing (e.g., the first housing 210 in FIGS. 2A and 2B or the first housing 310 in FIGS. 3A and 3B) and a second battery (e.g., the second battery 205 in FIGS. 2A to 3B) disposed in a second housing (e.g., the second housing 220 in FIGS. 2A and 2B or the second housing 320 in FIGS. 3A and 3B) may include monitoring a state of the first battery, a state of the second battery, and a state of the electronic device, determining whether or not the state of the first battery or the second battery meets configured conditions, if the state of the first battery or the second battery meets the configured conditions, determining to preferentially use one of the first battery or the second battery, based on a battery arrangement structure, and controlling the battery determined to be preferentially used, based on the state of the electronic device.

The "controlling" of the battery determined to be preferentially used may include "changing or maintaining" the battery determined to be preferentially used.

The determining may include determining that the state of the first battery or the second battery meets the configured conditions if a remaining capacity of the first battery or the second battery is less than a configured reference capacity, or if a difference in remaining capacity between the first battery and the second battery exceeds a configured capacity difference.

The state of the electronic device may include at least one of a signal intensity of the electronic device, a grip state of the electronic device, or a battery temperature, and the changing may include changing the battery determined to be preferentially used, based on at least one of the signal intensity of the electronic device, the grip state of the electronic device, or the battery temperature.

The controlling may include performing change to preferentially use the second battery included in the second housing spaced apart from an antenna if the signal intensity of the electronic device is less than a configured signal value while using the first battery included in the first housing including the antenna, based on the battery arrangement structure, or performing change to preferentially use the second battery included in the second housing if a user holds the first housing after the first battery is determined to be preferentially used according to the battery arrangement structure.

The method may further include monitoring a temperature of the first battery preferentially being used, based on the battery arrangement structure, determining whether the temperature of the first battery is equal to or higher than a configured temperature value, monitoring the grip state of the electronic device if the temperature of the first battery is equal to or higher than the configured temperature value, determining whether or not the battery to be preferentially used needs to be changed, based on the grip state of the electronic device,
changing the battery to be preferentially used to the second battery if the battery to be preferentially used needs to be changed, based on the grip state of the electronic device, identifying the signal intensity of the electronic device if the battery to be preferentially used does not need to be changed, based on the grip state of the electronic device, determining whether or not the signal intensity of the electronic device is less than a configured signal value, determining whether or not the battery to be preferentially used needs to be changed, based on a result of the determination, and if the battery to be preferentially used needs to be changed, changing the battery to be preferentially used to the second battery.

The various embodiments of the disclosure in this specification and drawings are merely specific examples presented to easily explain the technical idea of the disclosure and to help understand the disclosure, and are not intended to limit the scope of the disclosure. Therefore, the scope of the disclosure should be interpreted to include all changes or modifications derived from the technical idea of the disclosure, in addition to the embodiments disclosed herein.

## Claims

1. An electronic device comprising:
a first housing;
a second housing configured to be movable relative to the first housing;
a first battery disposed in the first housing;
a second battery disposed in the second housing;
a memory; and
a processor operatively connected to at least one of the first battery, the second battery, or the memory,
wherein the processor is configured to:
monitor a state of the first battery, a state of the second battery, and a state of the electronic device;
determine whether or not the state of the first battery or the second battery meets configured conditions;
in case that the state of the first battery or the second battery meets the configured conditions, determine to preferentially use one of the first battery or the second battery, based on a battery arrangement structure; and
control the battery determined to be preferentially used, based on the state of the electronic device.

2. The electronic device of claim 1, wherein the processor is configured to determine that the state of the first battery or the second battery meets the configured conditions in case that a remaining capacity of the first battery or the second battery is less than a configured reference capacity, or in case that a difference in remaining capacity between the first battery and the second battery exceeds a configured capacity difference.

3. The electronic device of claim 1, the processor is configured to:
store, in the memory, an expected load of a component disposed in the first housing or an expected load of a component disposed in the second housing;
determine to preferentially use the second battery disposed in the second housing in case that the expected load of the component disposed in the first housing stored in the memory is higher than the expected load of the component disposed in the second housing; and
determine to preferentially use the first battery disposed in the first housing in case that the expected load of the component disposed in the first housing is lower than the expected load of the component disposed in the second housing.

4. The electronic device of claim 1, wherein the state of the electronic device comprises at least one of a signal intensity of the electronic device, a grip state of the electronic device, or a battery temperature, and
wherein the processor is configured to change or maintain the battery determined to be preferentially used, based on at least one of the signal intensity of the electronic device, the grip state of the electronic device, or the battery temperature.

5. The electronic device of claim 4, wherein the processor is configured to:
measure a signal intensity of the electronic device received through a communication module of the electronic device; and
in case that the measured signal intensity of the electronic device is less than a configured signal value, determine to preferentially use a battery spaced apart from the antenna.

6. The electronic device of claim 4, wherein the processor is configured to perform change to preferentially use the second battery included in the second housing spaced apart from the antenna in case that the signal intensity of the electronic device is less than a configured signal value while using the first battery included in the first housing comprising the antenna, based on the battery arrangement structure.

7. The electronic device of claim 4, wherein the processor is configured to maintain the second battery determined to be preferentially used in case that the signal intensity of the electronic device is less than a configured signal value while using the second battery included in the second housing spaced apart from the antenna, based on the battery arrangement structure.

8. The electronic device of claim 4, wherein the processor is configured to:
detect a grip state of the electronic device through a grip sensor of the electronic device, and
determine to preferentially use a battery included in a housing that is not held, based on the grip state of the electronic device.

9. The electronic device of claim 4, wherein the processor is configured to perform change to preferentially use the second battery included in the second housing in case that a user holds the first housing after the first battery is determined to be preferentially used according to the battery arrangement structure.

10. The electronic device of claim 4, wherein the processor is configured to maintain the second battery that is determined to be preferentially used in case that a user holds the first housing after the second battery is determined to be preferentially used according to the battery arrangement structure.

11. The electronic device of claim 4, wherein the processor is configured to:
determine whether or not the battery to be preferentially used needs to be changed according to the grip state of the electronic device after the second battery is determined to be preferentially used, based on the signal intensity of the electronic device; and
change the battery to be preferentially used or maintain the battery to be preferentially used, based on a result of the determination.

12. The electronic device of claim 11, wherein the processor is configured to change the battery to be preferentially used to the first battery according to the grip state of the electronic device after the second battery is determined to be preferentially used, based on the signal intensity of the electronic device.

13. The electronic device of claim 1, wherein the processor is configured to:
monitor a temperature of the first battery preferentially being used, based on the battery arrangement structure;
determine whether the temperature of the first battery is equal to or higher than a configured temperature value;
monitor a grip state of the electronic device in case that the temperature of the first battery is equal to or higher than the configured temperature value; and
determine whether or not the battery to be preferentially used needs to be changed, based on the grip state of the electronic device.

14. The electronic device of claim 13, wherein the processor is configured to:
change the battery to be preferentially used to the second battery in case that the battery to be preferentially used needs to be changed, based on the grip state of the electronic device;
identify a signal intensity of the electronic device in case that the battery to be preferentially used does not need to be changed, based on the grip state of the electronic device;
determine whether or not the signal intensity of the electronic device is less than a configured signal value;
determine whether or not the battery to be preferentially used needs to be changed, based on a result of the determination; and
in case that the battery to be preferentially used needs to be changed, change the battery to be preferentially used to the second battery.

15. An operating method of an electronic device comprising a first battery disposed in a first housing and a second battery disposed in a second housing, the method comprising:
monitoring a state of the first battery, a state of the second battery, and a state of the electronic device;
determining whether or not the state of the first battery or the second battery meets configured conditions;
in case that the state of the first battery or the second battery meets the configured conditions, determining to preferentially use one of the first battery or the second battery, based on a battery arrangement structure; and
controlling the battery determined to be preferentially used, based on the state of the electronic device.
